# EUROPEAN PATENT SPECIFICATION

(11) **EP 0 601 334 B1**
(45) Date of publication and mention of the grant of the patent: **11.03.1998**
(21) Application number: 93117871.9
(22) Date of filing: 04.11.1993
(51) Int. Cl.: G06F 11/00

(54) **Method for observing program flow in a processor having internal cache memory**
Verfahren zur Beobachtung eines Rechnerprogrammablaufs in einem Prozessor mit internem Cache-Speicher
Procédé pour observer le déroulement d'un programme dans un processeur à antémémoire interne

(30) Priority: 05.12.1992 GB 9225506
(43) Date of publication of application: 15.06.1994
(73) Proprietor: MOTOROLA, INC., Schaumburg, IL 60196 (US)
(72) Inventor: Talgam, Yoav, Tel Aviv 69016 (IL); Pardo, Ilan, St Jerusalem (IL); Tsur, Eitan, 3 St Rishon Lezion (IL)
(74) Representative: Gibson, Sarah Jane

(56) References cited:
- EP-A- 0 371 418
- EP-A- 0 474 256
- GB-A- 2 200 482
- US-A- 3 673 573
- RESEARCH DISCLOSURE no. 322 , February 1991 , HAVANT GB page 122 'Improved Debug for Pipelined Processors'

## Description

### Field of the Invention

This invention relates to a cache processor and a method for observing program flow in a cache processor.

### Background of the Invention

A known method used to debug a processor utilises means for observing the program flow during operation of the processor. With systems having off-chip cache, program observability is relatively straight forward by using probes. However, observing the program flow of processors having cache integrated on-chip is much more problematical since most of the processing operations are performed internally within the chip. Program observability is further complicated for processors which support speculative execution. Speculative execution causes apparent (architectural) and actual (real) execution paths to disagree.

A known processor having on-chip cache addresses the program flow observability problem by utilising a special debug port located at the cache core interface. However, only jump addresses are reflected at this special port and so only part of the program can be observed. Furthermore, since the port is located at the cache core, the port electrically loads it and therefore contributes to the critical path delay as the processor's CPU has to drive the port as well. Since the known processor does not support speculative execution, program observability using the special debug port does not address the difficulties associated with speculative execution.

In other processors, for example Motorola's 68030 microprocessor, a cache inhibit mode is used to reflect program flow on the pins during a debug operation. However, by disabling the cache, the processor does not operate as it would during normal operation in a system.

UK Patent Application no. GB-A-2200482 discloses a method for monitoring flow in a CISC microprocessor which does not support speculative execution. This method reports the status of executed instructions.

### Summary of the Invention

Thus, it is an object of the present invention to provide a processor with integrated cache having improved program flow observability.

In accordance with a first aspect of the present invention there is provided a method for observing program flow in a cache processor supporting concurrent execution of multiple instructions using a development system coupled to at least one status pin and bus pins of the processor, the processor having an instruction register for storing instruction addresses for fetched instructions, the method comprising the steps of:
providing program instruction information on the at least one status pin, the program instruction information comprising first data which indicates the type of instruction fetched during a previous cycle, the type of instruction being either a non-jump or a jump instruction, and second data which is associated with a flush instruction, and which indicates the number of instructions cancelled according to the flush instruction during the present cycle;
initiating a show cycle by the processor when a jump type of instruction is fetched, wherein a target address of the jump instruction is provided to the bus pins;
storing the program instruction information in a first memory in the development system;
storing the target addresses of the jump instructions in a second memory in the development system; and
processing the program instruction information from the first memory and the target addresses from the second memory using the instruction addresses in the instruction register so as to reconstruct the executed program flow, the processing step comprising the steps of:
   (a) resetting a stack in the development system;
   (b) locating a start reference point in the first and second memories, the start reference point being a jump instruction in the first memory and its target address in the second memory;
   (c) storing the located target address in the stack;
   (d) reading successively each instruction stored in the first memory from the located start reference point;
   (e) detecting the type of each instruction stored, for each detected non-jump instruction updating the previous address stored in the stack according to the non-jump instruction and storing the updated instruction address in the stack, for each detected jump instruction storing the target instruction address from the second memory in the stack and for each detected flush instruction cancelling a predetermined number of instruction addresses stored in the stack, the predetermined number being determined by the second data; and
   (f) repeating steps (d) and (e) for all the instructions stored in the first memory whereby the addresses stored in the stack represent the executed program flow.

Thus, the type of instruction information from the at least one status pin and the target address from the bus pins enables the instructions addresses for non-jump type of instructions to be obtained and together with the target addresses enables the executed program flow to be reconstructed.

### Brief Description of the Drawings

A preferred embodiment of the invention will now be described, by way of example only, with reference to the accompanying drawings in which:
FIG. 1 shows a simplified block schematic diagram of part of a processor in accordance with the present invention;
FIG. 2 shows part of a program trace in accordance with the invention from which the program flow can be reconstructed; and
FIG. 3 is a simplified flow chart for the program flow reconstruction process in accordance with the present invention.

### Detailed Description of the Preferred Embodiment

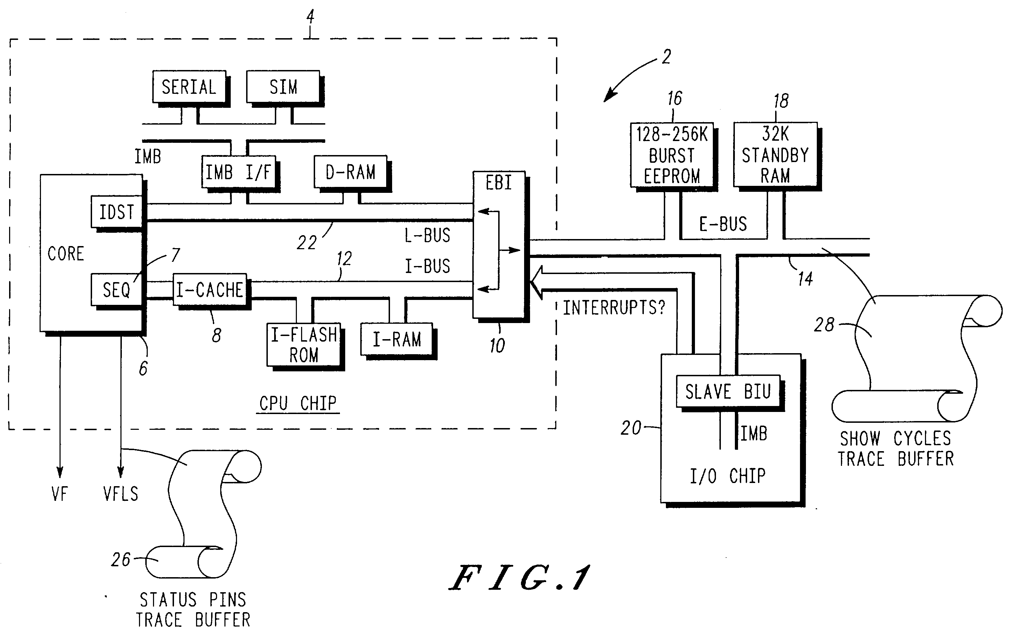

Referring firstly to FIG. 1, part 2 of a processor in accordance with a preferred embodiment of the invention comprises a CPU chip 4 having a core 6 with a sequencer 7, on-chip cache 8 and external bus interface 10 for communication with an external bus 14. The cache 8 is coupled to the sequencer 7 of the core and to the external bus interface 10 via an instruction bus 12. A data bus 22 couples the core to the external bus interface and to peripherals such as D-RAM (Data RAM) and a system integration module (SIM) via the internal module bus (IMB) and interface (IMB I/F). The external bus interface 10 provides an interface between the instruction bus 12 and data bus 22 and an external bus 14 which communicates with off-chip peripherals such as additional memory 16 and 18 and an input/output chip 20. The CPU core 6 receives interrupts from the off-chip peripherals via the bus interface 10.

The processor in accordance with the preferred embodiment implements a prefetch instruction queue combined with parallel, out of order, pipelined execution. That is, many instructions of an instruction stream are concurrently processed by the processor not necessarily in the sequence specified by the executing program. Furthermore, the preferred embodiment can support speculative execution wherein instructions are executed speculatively in anticipation of the instruction stream going in a certain direction. These features, together with the fact that fetch cycles may be performed from the cache 8 make it extremely difficult to provide the user with the real program flow trace. This is necessary for a debug operation, for example, when a user can determine whether a processor is functioning correctly by observing the program flow with a development system.

Instructions progress inside the CPU 4 from fetch to retire as is well known in the art. Instructions are fetched sequentially until branches (direct or indirect) appear in the program flow or until a stall in execution forces the processor not to fetch the next instruction. Instructions retire from the processor only after they have finished execution with no exception and all preceding instructions have finished execution with no exception. Therefore, only retired instructions can be considered architecturally executed.

The processor hardware is careful to ensure that the out of order operation and the speculative execution never have an effect different from that specified by the program. This is most difficult when an exception occurs after instructions, that logically follow the faulting instruction, have already been completed.

At the time of an exception, the processor state becomes visible to other processes and therefore must be in its correct architecturally specified condition. The processor can achieve this by using a history buffer or reorder queues which in the preferred embodiment is located in the core 6 to automatically backtrack to the instruction which caused the exception and is therefore said to implement a 'precise' exception model. The history buffer mechanism used to backtrack in the event of an exception is the same mechanism used to recover from mis-predicted branches during speculative execution.

This buffer is implemented in a FIFO queue which records the relevant processor state at the time each instruction is fetched. Instructions are placed at the end of the queue when they are fetched and move to the front of the queue whilst they are in execution. Instructions remain in the queue until their execution is completed and all previous instructions in the program order are completed so that in the event of an exception, the processor state which is necessary to recover the architectural state is available. As instructions finish execution, they are released (retired) from the queue and the buffer storage reclaimed for new instructions entering the queue.

An exception may be generated at any time during instruction execution and is recorded in the history buffer when the instruction finishes execution. The exception is not detected until the faulting instruction reaches the front of the history queue. When the exception is detected, the queue is reversed and the preceding instructions flushed so that the processor is restored to its state at the time the faulting instruction was fetched. The processor state is restored at a constant rate, for example two instructions per clock. The number of flushes required to restore the processor state is recorded by the processor. The recovery states are already implemented as internal states (i.e. they are in the history buffer queue), and thus, are readily available for monitoring. The number of flushes and the recovery states information provide sufficient information for an external monitor to follow and reconstruct the recovered architectural order.

In order to aid in the provision of program flow observability, the processor in accordance with a preferred embodiment of the invention further comprises two sets of status pins VF and VFLS and an input pin Vsync by which the development system (not shown) can be coupled to the core 6. The development system can also be coupled to bus pins which couple the external bus 14 to the CPU chip 4.

The pins VF and VFLS provide an indication as to the status of the program flow. The information provided by the status pins VF and VFLS is held in a trace buffer 26 of the development system and allows for the program to be reconstructed for all non-jump operations, including branches. Although a preferred embodiment of the invention is described herein with reference to pins VF, VFLS and Vsync, the invention is not intended to be limited thereto. Any number of pins may be used, including only one multiplexed pin.

As used herein, the term 'immediate branch' (also referred to as 'branch') is used to describe a program flow change instruction in which the target address is calculated as a function only of the address of the command and a field in the command itself (referred to as the 'immediate field'). The term 'indirect branch' or 'jump' is used to describe a program flow command (or condition such as an interrupt) in which the target address is calculated as a function not only of the address of the command and a field in the command itself: that is, a 'jump' describes all the program flow change situations that are not immediate branches.

In order to reconstruct the program for jump operations, the processor in accordance with the present invention uses a show cycle in which the target address of the jump is visible on the external bus 14, in addition to the information on the VF and VFLS pins. During a show cycle, the target addresses of the jumps are fetched from the external bus 14 via the bus pins and read into a show cycle trace buffer 28 of the development system. In the preferred embodiment the show cycle is implemented by asserting an internal cache inhibit request whereby all instruction fetches of the target addresses of the jumps are forced to be cache inhibited. This show cycle is active only when fetching jump targets since the jumps are register indirect and the target address cannot be reconstructed from the information from the status pins. The processor may comprise programmable means by which the show cycle may be enabled or disabled so that for real applications, in order to avoid affects on performance, the show cycle can be disabled.

The trace buffers 26 and 28 are preferably located in substantially the same area of memory in the development system so that when a jump operation is indicated on, for example the VF pin, the address read from the bus 14 during the show cycle can be recorded in the same area of memory as the information on the VF pin. Thus, since the show cycle address is associated with the jump command, synchronisation is maintained.

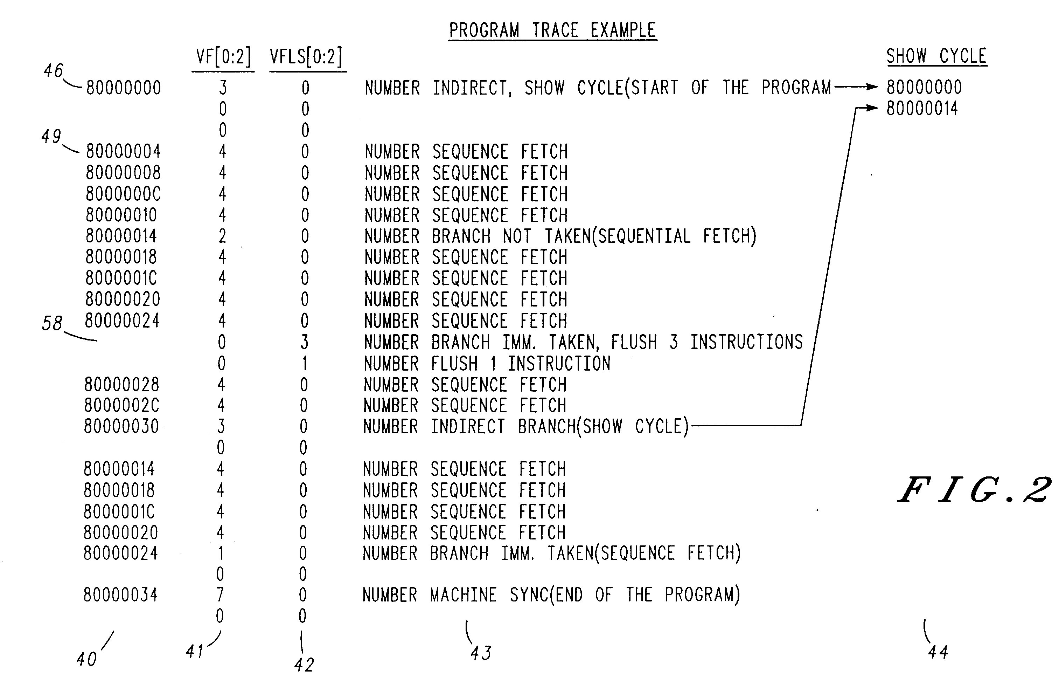

The reconstruction process will be described in more detail below with reference to FIG. 2.

In the preferred embodiment, each of the status pins VF and VFLS provides three bits of information to the development system (not shown) which is used to reconstruct the program flow.

The information provided by the VF pin indicates the type of instruction which was fetched during the previous clock cycle. Possible values are:

| | |
|---|---|
| 000 - | Stall (no operation) |
| 100 - | Sequential |
| 001 - | Branch immediate taken |
| 010 - | Branch NOT taken |
| 011 - | Jump, indirect flow change taken and a show cycle will be performed on the external bus |
| 111 - | Processor synchronised, history buffer and instruction queue are empty |

The information provided by the VFLS pin indicates how many instructions are flushed from the instruction queue and history buffer during the present clock cycle. The possible values are 0 to the maximum number of active instruction commands.

The signal on the input pin Vsync forces system synchronisation followed by the show cycle. When the synchronisation process is complete, the information on the status pin VF will equal 111.

In a speculative execution processor with precise interrupts, the processor status information on the pins VF and VFLS does not show retired instructions but a combination of the issued and flushed instructions. From this information the program flow can be reconstructed.

FIG. 2 shows an example of a program trace from which the program flow can be reconstructed. The first column 40 lists the addresses stored in the instruction register in the core 6. The second 41 and third 42 columns indicate the information provided on the status pins VF and VFLS for each fetch and stored in the trace buffer 26. The fourth column 43 is a description of the type of fetch and the fifth column 44 indicates the addresses stored in the show cycle buffer 28.

The information on the status pins VF and VFLS are preferably sampled into the trace buffer 26 once per clock cycle. The addresses on the bus 14 are sampled into the show cycle trace buffer 28 during a valid show cycle.

The development system reconstructs the program flow (real or architectural) using the information stored in the trace buffer 26 and the show cycle trace buffer 28, the addresses from the instruction register and a post-processing tool.

At the start of the reconstruction process, the post-processing tool must locate a trace window inside the trace buffers: the trace window is bounded by a start reference point and either by the end of the trace buffers or by the last valid entry. The start reference point can be any architecturally executed instruction marked with a show cycle.

If the trace buffers are implemented as cyclic buffers, old data is overwritten by new data, and so a start reference point must be located at the start of the reconstruction process. Since the number of show cycles executed on the external bus 14 corresponds to the number of indirect flow changes reported on the VF, VFLS pins, the start reference point is found by counting the show cycles and indirect flow indication backwards from the end of both the trace buffers 26, 28 (using the last pointers to the buffers) to the earliest show cycle. This earliest show cycle, along with its corresponding VF, VFLS information, is the start reference point. All information in the trace buffers 26 and 28 prior to this start reference point is lost and cannot be used by the post-processing tool.

It may be necessary to periodically generate a start reference point. This can be generated in a number of ways. For example, using a periodic interrupt, programming a break-point at the desired start of the trace window, asserting the Vsync pin or any sync followed by an indirect branch.

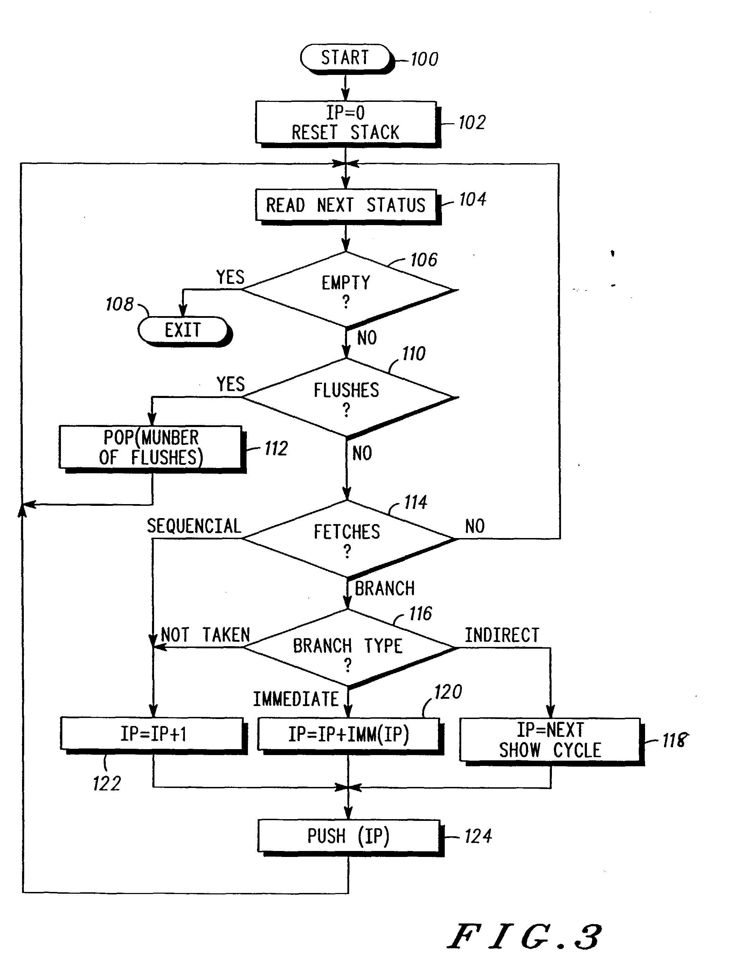

FIG. 3 is a flow chart showing the program flow reconstruction process which uses the information stored in the trace buffer 26 and show cycle trace buffer 28 to reconstruct the program flow.

The process utilises a stack in the development system to hold the program flow trace. Each entry in the stack may hold an instruction address. At the end of the process the stack holds the program flow trace, that is, the addresses of the instructions in the order of execution. The address at the top of the stack is the address of the last executed instruction. An instruction pointer IP holds the temporary 32-bit instruction pointer value for the process.

The reconstruction process will now be described by way of example with reference to FIG. 2.

The process starts at block 100. The stack is reset and the instruction pointer IP is set to zero. The resetting of the instruction pointer IP to zero is optional since the reconstruction always starts with a show cycle and this loads the IP to a known value at block 118. At block 104, the information on the status pins VF and VLFS at the beginning of the trace window is read from the trace buffer 26. In the example, the show cycle at line 46 of FIG. 2 is the start reference point of the trace window.

If the trace buffers are empty, block 106, the process is exited at block 108. If the trace buffers are not empty, block 106, at block 110 the process determines whether the status information indicates an instruction flush or fetch. For line 49, the information from status pin VF indicates a fetch so the process branches from block 110 to block 114. If the information indicates a flush, for example at line 58 when VFLS represents 3 flushes, the process pops a predetermined number of entries from the stack: the predetermined number of entries being determined by information from the VFLS pin. For line 58, three instructions are flushed from the stack. Once all the predetermined number of flushes have been performed the process returns to block 104 and reads the next status information stored in the trace buffer.

At block 114, the process determines whether the status information indicates a branch or sequential fetch. If the information indicates neither the process returns to block 104. For a sequential fetch, the instruction pointer IP is incremented by 1 at block 122 whereby the address located in the instruction pointer (IP=IP+1) is pushed onto the stack at block 124 before the process returns to read the next status at block 104. For a branch fetch, at block 116, the process determines the branch type, that is whether it is an indirect branch (jump), an immediate branch or branch not-taken (sequential fetch). For a not-taken branch, the process proceeds as a sequential fetch via block 122 to block 124. For an immediate branch, at block 120, the process extracts the immediate offset field of the branch immediate instruction located at the address pointed to by the instruction pointer IP. This address is then pushed onto the stack at block 124 before the process returns to block 104 to read the next status information from the trace buffer 26. For an indirect branch or jump (for example, at line 46), at block 118, the process returns the next captured address from the show cycle trace buffer 28 (address 80000000) which address is then pushed onto the stack at block 124 before the process returns to block 104 to read the next status information from the trace buffer 26.

The flow chart described above with reference to FIGs. 2 and 3 assumes that no flushes and fetches have been recorded during the same clock. In this case (start fetch handler while recovering the machine) all flushes, including those during subsequent clocks, are processed until a status with no flushes is encountered. Only then are the fetches occurring during any of these clocks processed.

In summary, the present invention provides means for observing program flow in cache processors which may support speculative execution. The processor in accordance with the invention encodes the real (as opposed to the architectural) program flow in terms of stalls (no-operation), and execution of sequential instructions (including not-taken branches), and changes of flow (including those due to program transfers like branches, jumps, supervisor calls and traps and also those due to hardware like reset and interruptions) for which encoded information is provided on processor status pins. Target addresses of indirect flow changes are obtained from the normal bus pins using a special 'show cycle' mode.

The instruction addresses of the fetched instructions are provided implicitly on the status pins from the type of instruction information.

The invention allows very efficient program flow capture, for example at an average of less than 6 bits per fetched instructions, with optional further compression by not storing sequential instructions information between flow changes, with sufficient data to reconstruct both actual (real) and architectural program flows, with minimal hardware requirements.

The status pins report changes in the state of the processor at the processor state change frequency so all state changes are observable. Thus, in a processor supporting out of order execution where typically the number of instructions that can be issued per clock is lower than the number of instructions that can be architecturally terminated each clock, by allowing the state changes to be speculatively reported on issue and then corrected as necessary, the present invention provides a hardware saving.

The present invention also ensures that the trace buffer memory size required by the development system is minimised due to the data reduction inherent in the system. If it is assumed that the current instruction pointer value is known (it can be established in any 'fetch and show cycle' after every reset), it is sufficient to take no action on stalls and increment the instruction pointer IP on sequential instruction execution to keep the instruction pointer updated. When changes of flow are reported, the most frequent cause is taken, that is instruction-pointer-relative branches with immediate offsets. The branch taken indication is sufficient to determine the next instruction pointer. Only indirect branches (jumps), exceptions/interruptions etc. which are relatively infrequent need specify the full target address explicitly via fetch and show cycles. The encoding of the synchronisation states is efficiently made on the status pins. Therefore, very few bits need be captured per cycle to fully determine the real program flow. If only the architectural program flow is needed, then further reduction is possible via a simple hardware filter which handles the fix-up of speculative mispredictions in real time.

It will be appreciated that the invention can be used and has the same advantages in a processor with on-chip cache which does not support speculative execution.

## Claims

1. A method for observing program flow in a cache processor (4) supporting concurrent execution of multiple instructions using a development system coupled to at least one status pin (VF, VFLS) and bus pins of the processor, the processor (4) having an instruction register for storing instruction addresses for fetched instructions, the method characterized in that it comprises the steps of:
providing program instruction information on the at least one status pin, the program instruction information comprising first data which indicates the type of instruction fetched during a previous cycle, the type of instruction being either a non-jump or a jump instruction, and second data which is associated with a flush instruction, and which indicates the number of instructions cancelled according to the flush instruction during the present cycle;
initiating a show cycle by the processor when a jump type of instruction is fetched, wherein a target address of the jump instruction is provided to the bus pins;
storing the program instruction information in a first memory (26) in the development system;
storing the target addresses of the jump instructions in a second memory (28) in the development system; and
processing the program instruction information from the first memory (26) and the target addresses from the second memory (28) using the instruction addresses in the instruction register so as to reconstruct the executed program flow, the processing step comprising the steps of:
(a) resetting (102) a stack in the development system;
(b) locating a start reference point in the first and second memories, the start reference point being a jump instruction in the first memory and its target address in the second memory;
(c) storing the located target address in the stack;
(d) reading (104) successively each instruction stored in the first memory from the located start reference point;
(e) detecting (110, 114, 116) the type of each instruction stored, for each detected non-jump instruction updating (120, 122) the previous address stored in the stack according to the non-jump instruction and storing the updated instruction address in the stack, for each detected jump instruction storing (118) the target instruction address from the second memory (28) in the stack and for each detected flush instruction cancelling (112) a predetermined number of instruction addresses stored in the stack, the predetermined number being determined by the second data; and
(f) repeating steps (d) and (e) for all the instructions stored in the first memory whereby the addresses stored in the stack represent the executed program flow.

2. A method according to claim 1 wherein the initiating a show cycle step comprises the steps of:
detecting the type of instruction fetched during a previous cycle; and
generating a cache inhibit request in response to detecting a jump type of instruction whereby the cache memory (8) of the processor (4) is inhibited and the target address of the detected jump instruction is provided to the processor pins.

3. A method according to claim 1 or 2 wherein the locating step comprises the step of locating the first jump instruction stored in the first memory thereby locating the first show cycle.

4. A method according to claim 1, 2, or 3 wherein the processor comprises first (VF) and second (VFLS) status pins, the first status pin (VF) providing the first data indicating the type of instruction fetched during a previous cycle and the second status pin (VFLS) providing the second data.

5. A method according to any preceding claim wherein the first memory (26) is associated with the second memory (28) whereby a stored target address of a jump instruction is associated with the stored jump instruction.

6. A method according to any preceding claim wherein the cache processor supports speculative execution.

## Patentansprüche

1. Verfahren zur Beobachtung eines Programmablaufs in einem Cache-Prozessor (4), die gleichzeitige Ausführung von mehreren Anweisungen unterstützend, unter Verwendung eines Entwicklungssystems, das mit mindestens einem Zustandsanschluß (VF, VFLS) und Bus-Anschlüssen des Prozessors verbunden ist, wobei der Prozessor (4) ein Anweisungsregister zum Speichern der Anweisungsadressen von geholten Anweisungen hat und das Verfahren dadurch gekennzeichnet ist, daß es die Schritte umfaßt:
Bereitstellen von Programmanweisungsinformation auf dem mindestens einen Zustandsanschluß, wobei die Programmanweisungsinformation eine erste Angabe, die die Art der während eines vorherigen Zyklus geholten Anweisung, wobei die Art der Anweisung entweder eine Nicht-Sprunganweisung oder eine Sprunganweisung ist, und eine zweite Angabe umfaßt, die zu einer Räumungsanweisung gehört und die die Zahl der Anweisungen anzeigt, die wegen der Räumungsanweisung während des vorliegenden Zyklus verworfen wurden,
Initiieren eines Anzeige-Zyklus durch den Prozessor, wenn eine Anweisung von Sprungtyp geholt wurde, wobei eine Zieladresse der Sprunganweisung auf die Bus-Anschlüsse gegeben wird,
Speichern der Programmanweisungsinformation in einem ersten Speicher (26) im Entwicklungssystem,
Speichern der Zieladressen der Sprunganweisungen in einem zweiten Speicher (28) im Entwicklungssystem, und
Verarbeiten der Programmanweisungsinformation aus dem ersten Speicher (26) und der Zieladressen aus dem zweiten Speicher (28) unter Verwendung der Anweisungsadressen im Anweisungsregister, um so den ausgeführten Programmablauf zu rekonstruieren, wobei der Verarbeitungsschritt die Schritte umfaßt:
(a) Zurücksetzen (102) eines Stapels im Entwicklungssystem,
(b) Auffinden eines Anfangsbezugspunkts im ersten und zweiten Speicher, wobei der Anfangsbezugspunkt eine Sprunganweisung im ersten Speicher und ihre Zieladresse im zweiten Speicher ist,
(c) Speichern der gefundenen Zieladresse im Stapel,
(d) Lesen (104) nacheinander jeder gespeicherten Anweisung im ersten Speicher, ausgehend vom gefundenen Anfangsbezugspunkt,
(e) Erfassen (110, 114, 116) der Art einer jeden gespeicherten Anweisung, wobei bei jeder erfaßten Nicht-Sprunganweisung die vorige im Stapel gespeicherte Adresse gemäß der Nicht-Sprunganweisung aktualisiert wird (120, 122) und die aktualisierte Anweisungsadresse im Stapel gespeichert wird, wobei für jede erfaßte Sprunganweisung der Anweisungszieladresse aus dem zweiten Speicher (28) im Stapel gespeichert (118) wird und für jede erfaßte Räumungsanweisung zum Verwerfen (112) einer vorgegebenen Anzahl von im Stapel gespeicherten Anweisungsadressen, die in dem Stapel gespeichert sind, die vorgegebene Anzahl durch die zweite Angabe bestimmt wird; und
(f) Wiederholen der Schritte (d) und (e) für jede der in dem ersten Speicher gespeicherten Anweisungen, wobei die im Stapel gespeicherten Adressen den ausgeführten Programmablauf wiedergeben.

2. Verfahren gemäß Anspruch 1, bei dem das initiieren eines Anzeige-Zyklusschrittes die Schritte umfaßt:
Erfassen der Art der während eines vorausgegangenen Zyklus geholten Anweisung, und
Erzeugen einer Cache-Sperrabfrage als Antwort auf das Erfassen einer Anweisung vom Sprungtyp, wodurch der Cache-Speicher (8) des Prozessors (4) gesperrt wird und die Zieladresse der erkannten Sprunganweisung auf den Prozessoranschlüssen ausgegeben wird.

3. Verfahren gemäß Anspruch 1 oder 2, bei dem der Auffindungsschritt den Schritt umfaßt, die im ersten Speicher gespeicherte erste Sprunganweisung aufzufinden, wodurch der erste Anzeige-Zyklus aufgefunden wird.

4. Verfahren gemäß Anspruch 1, 2 oder 3, bei dem der Prozessor einen ersten (VF) und zweiten (VFLS) Zustandsanschluß umfaßt, wobei der erste Zustandsanschluß (VF) die erste Angabe liefert, die die Art der während eines vorherigen Zyklus geholten Anweisung anzeigt, und der zweite Zustandsanschluß (VFLS) die zweite Angabe liefert.

5. Verfahren gemäß einem der vorangehenden Ansprüche, bei dem der erste Speicher (26) mit einem zweiten Speicher (28) verbunden ist, wodurch eine gespeicherte Zieladresse einer Sprunganweisung mit der gespeicherten Sprunganweisung verbunden ist.

6. Verfahren gemäß einem der vorangehenden Ansprüche, bei dem der Cache-Prozessor eine spekulative Ausführung unterstützt.

## Revendications

1. Procédé pour observer le déroulement d'un programme dans un processeur à antémémoire (4) supportant l'exécution simultanée de plusieurs instructions en utilisant un système de développement couplé à au moins une broche d'état (VF, VFLS) et à des broches de bus du processeur, le processeur (4) comportant un registre d'instruction pour stocker des adresses d'instruction pour des instructions prises en charge, le procédé étant caractérisé en ce qu'il comprend les étapes qui consistent à :
fournir des informations d'instruction de programme sur la au moins une broche d'état, les informations d'instruction de programme comprenant des premières données qui indiquent le type d'instruction prise en charge pendant un cycle précédent, le type d'instruction étant une instruction soit non de saut soit de saut, et des secondes données qui sont associées à une instruction de vidage, et qui indiquent le nombre d'instructions supprimées selon l'instruction de vidage pendant le cycle présent ;
déclencher un cycle de présentation par le processeur quand une instruction de type de saut est prise en charge, pendant lequel une adresse recherchée de l'instruction de saut est fournie aux broches de bus ;
stocker les informations d'instruction de programme dans une première mémoire (26) dans le système de développement ;
stocker les adresses recherchées des instructions de saut dans une seconde mémoire (28) dans le système de développement ; et,
traiter les informations d'instruction de programme de la première mémoire (26) et les adresses recherchées de la seconde mémoire (28) en utilisant les adresses d'instruction dans le registre d'instruction de manière à reconstituer le déroulement du programme exécuté, l'étape de traitement comprenant les étapes qui consistent à :
(a) remettre à l'état initial (102) une pile dans le système de développement ;
(b) localiser un point de référence de début dans les première et seconde mémoires, le point de référence de début étant une instruction de saut dans la première mémoire et son adresse recherchée dans la seconde mémoire ;
(c) stocker l'adresse recherchée localisée dans la pile ;
(d) lire (104) successivement chaque instruction stockée dans la première mémoire à partir du point de référence de début localisé ;
(e) détecter (110, 114, 116) le type de chaque instruction stockée, pour chaque instruction non de saut détectée mettre à jour (120, 122) l'adresse précédente stockée dans la pile selon l'instruction non de saut et stocker l'adresse d'instruction mise à jour dans la pile, pour chaque instruction de saut détectée stocker (118) l'adresse d'instruction recherchée provenant de la seconde mémoire (28) dans la pile et pour chaque instruction de vidage détectée supprimer (112) un nombre prédéterminé d'adresses d'instruction stockées dans la pile, le nombre prédéterminé étant déterminé par les secondes données ; et,
(f) répéter les étapes (d) et (e) pour toutes les instructions stockées dans la première mémoire, les adresses stockées dans la pile représentant ainsi le déroulement du programme exécuté.

2. Procédé selon la revendication 1, dans lequel l'étape de déclenchement d'un cycle de présentation comprend les étapes qui consistent à :
détecter le type d'instruction prise en charge pendant un cycle précédent ; et,
générer une demande d'interdiction d'antémémoire en réponse à la détection d'une instruction de type de saut par laquelle l'antémémoire (8) du processeur (4) est interdite et l'adresse recherchée de l'instruction de saut détectée est fournie aux broches du processeur.

3. Procédé selon la revendication 1 ou 2, dans lequel l'étape de localisation comprend l'étape de localisation de la première instruction de saut stockée dans la première mémoire permettant de localiser le premier cycle de présentation.

4. Procédé selon la revendication 1, 2 ou 3, dans lequel le processeur comprend des première (VF) et seconde (VFLS) broches d'état, la première broche d'état (VF) fournissant les premières données indiquant le type d'instruction prise en charge pendant un cycle précédent et la seconde broche d'état (VFLS) fournissant les secondes données.

5. Procédé selon l'une quelconque des revendications précédentes, dans lequel la première mémoire (26) est associée à la seconde mémoire (28), ce qui permet à une adresse recherchée stockée d'une instruction de saut d'être associée à l'instruction de saut stockée.

6. Procédé selon l'une quelconque des revendications précédentes, dans lequel le processeur à antémémoire supporte une exécution spéculative.
